# EUROPÄISCHE PATENTSCHRIFT

(11) **EP 1 617 255 B1**
(45) Veröffentlichungstag und Bekanntmachung des Hinweises auf die Patenterteilung: **28.01.2009**
(21) Anmeldenummer: 04023499.9
(22) Anmeldetag: 01.10.2004
(51) Int. Cl.: G02B 21/00, G02B 21/10

(54) **Anordnung zur mikroskopischen Beobachtung und / oder Detektion**
Arrangement for microscopic observation and / or detection
Agencement pour l'observation et / ou la détection microscopique

(30) Priorität: 16.07.2004 DE 102004034957
(43) Veröffentlichungstag der Anmeldung: 18.01.2006
(73) Patentinhaber: Carl Zeiss MicroImaging GmbH, 07745 Jena (DE)
(72) Erfinder: Wolleschensky, Ralf, 07743 Jena (DE)
(74) Vertreter: Hampe, Holger

(56) Entgegenhaltungen:
- DE-A- 10 257 237
- DE-A1- 3 409 657
- DE-A1- 19 630 322
- US-A- 4 626 079
- SWOGER J.ET AL: 'A confocal fiber-coupled single-lens theta microscope' REVIEW OF SCIENTIFIC INSTRUMENTS Bd. 69, Nr. 8, August 1998, Seiten 2956 - 2963, XP000832276

## Beschreibung

Stelzer u.a. beschreiben eine Weiterentwickung der sogenannten "Theta Mikroskopie" (Lindek, et at.; Journal of modern optics, 1999, vol. 46, no. 5, 843-858) bei der die Detektion in einem Winkel von 90 Grad zur Beleuchtung steht, die sogenannte "SPIM" (selectice plane illumination microscope)
(http://www.focusonmicroscopy.org/2004/abstracts/091 Stelzer.pdf).

Weitere Entwicklungen zur Theta-Mikroskopie sind in den folgenden Veröffentlichungen zu finden:

J. Swoger et al., "A confocal fiber-coupled single-lens theta microscope", Review of Scientific Instruments, Vol. 69, Nr. 8, 2956-2963 (1998);

F.-M. Haar et al., "Developments and Applications of Confocal Theta Microscopy", SPIE Conference on Three-Dimensional and Multidimensional Microscopy, Vol. 3605, 48-54 (1999).

Die Erfindung, wie sie Gegenstand der Patentansprüche ist und ihre Vorteile werden nachstehend näher erläutert
Abweichend vom bekannten Theta Aufbau erfolgt vorteilhaft hier eine Einspiegelung am Rand außerhalb des eigentlichen Beobachtungsobjektives , beispielsweise über abbildende Spiegel mit geringer numerischer Apertur, der mechanisch Teil des Objektives ist, um eine sehr homogene Z Auflösung entlang einer erzeugten Linie oder Fläche zu erzielen.
Nach einer Lichtverzweigung (Teiler) zur parallelen Laserbeleuchtung von mehreren Seiten gelangen vorteilhaft Parallelstrahlen über einen Hauptfarbteiler, der auch wie in DE10257237 ausgebildet sein kann und eine Scanoptik auf die Probe.
In der Probe wird mit geringer numerischer Apertur von mindestens einer Seite auf einen Punkt fokussiert, es entsteht dadurch ein sehr flacher Lichtkegel, der im Innern der Probe quasi gleichverteilt ist ( konstante Einschnürung).
Die Dicke der Linie oder Fläche ist durch die Brennweite/ numerische Apertur einstellbar.
Von oben durch das Objektiv erfolgt eine Betrachtung ( Detektion ) der beleuchteten Punkte entlang dieses Lichtkegels mit einem Zeilen- oder Flächendetektor
Die Tiefenauflösung wird durch die Brennweite/ numerische Apertur der Einspiegelung von der Seite vorgegeben. Bei einem Linienscanner der hier nicht beansprucht wird, kann sie zusätzlich durch eine konfokale Schlitzblende, die sich vor dem Zeilendetektor befindet, eingestellt werden.
Der Strahlteiler ist vorteilhaft in der Objektivpupille angeordnet ( des Beobachtungsobjektivs ) und weist am Rand in der nicht beanspruchter Vorrichtung zwei Punkte oder Striche auf zur Reflektion der quasiparallelen Lichtbündel in Richtung des Objektives auf. Ansonsten ist er für Probenlicht durchlässig ausgebildet.
Eine Umkehrung ( Beleuchtung über kleine transmittierende Bereiche) und Beobachtung des reflektierten Probenlichtes ist hingegen Gegenstand der Erfindung. Bei dem nicht erfindungsgemäßen Linienscanner wird eine Zeile detektiert.
Es wird in der Probe eine Linie erzeugt und die Fluoreszenz entlang dieser Linie auf einen Zeilendetektor abgebildet. Durch die Beleuchtung von beiden Seiten werden Abschattungen vermieden. Prinzipiell könnte man auch nur von einer Seite beleuchten. Um diese Linie zu erzeugen wird durch seitliche Beleuchtung auf den Punkt fokussiert. Daher ist auf dem Spiegel in der Objektivpupille eine kreisrunde Verteilung geringen Querschnitts vorgesehen.
Die im Objekt erzeugte Linie wird durch den in der Pupille ( konjugierte Ebene) vorhandenen Scanner über das Objekt bewegt.
Der Scanner descannt die Linie in Richtung der Detektion wieder und bildet sie auf einen Zeilendetektor ab.
Das Rücklicht von der Probe geht durch den Teilspiegel hindurch in Richtung des Zeilendetektors.
Es könnte auch direkt der Randbereich eines reflektierenden Streifens unter Beleuchtung mit zwei Punkten verwendet werden.
Es würde dabei etwas Effizienz durch den durchgehenden Streifen bei der SPIM Anwendung verloren gehen. Weiterhin müßte das Objektiv bei der Liniendetektion gegen das oben beschriebene ausgewechselt werden.

Im Weitfeld erzeugen beispielsweise eine Zylinderlinse oder eine andere geeignete Optik und die Spiegel eine Beleuchtungslinie entlang der y-Achse, so dass eine Beobachtungsfläche in der xy-Ebene entsteht.
Hierzu wird in Y-Richtung in die Pupille fokussiert und somit eine Linienbeleuchtung erzeugt.

Das Objektiv weist Reflektoren mindestens im Bereich der Beleuchtung auf.
Die Abmessungen sind so bemessen , daß im Weitfeld ein Lichtband übertragen werden kann, wobei diese Ausbildung auch mit Punktstrahlen von der Seite verwendbar ist ( Bild zu verschiedenen Zeiten auf unterschiedlichen Bereichen des Spiegels).

Die Spiegel ( abbildende Spiegel) fokussieren Parallelstrahlen auf die optische Achse des inneren Objektives , die rückwärtige Brennebene der Spiegel liegt in der Objektivpupille.
Eine innere Linse dient der Beobachtung ( Detektion). Im äußeren Bereich ist keine Optik erforderlich. Nur wenn zur Strahlumlenkung in Richtung der Probe ebene Spiegel vorgesehen sind, ist vorher eine optische Wirkung des äußeren Rings durch entsprechende Optiken mit geringer Apertur erforderlich.
Mit der Wahl der äußeren Brennweite wird die optische Schnittdicke ( entlang der optischen Achse des inneren Objektivs) eingestellt ( Beeinflussung Strahldurchmesser).
Mit einer Variooptik könnte sie variabel eingestellt werden.
Die Einspiegeloptik kann ringförmig ausgebildet sein, d.h. zur rotationssymetrischen Ausleuchtung der Probe von allen Seiten. Diese Anordnung ist insbesondere bei einer Weitfelddetektion vorteilhaft. Bei Verwendung eines Linienscanners erfolgt die Beleuchtung der Probe vorzugsweise mit einem Ringsegment, d.h. aus einer fest vorgegebenen Richtung. Entlang der gebildeten Achse, die senkrecht zur optischen Achse verläuft, kann dies durch Beleuchtung aus einer oder aus zwei entgegengesetzt zueinander laufenden Richtungen erfolgen. Die beiden Beleuchtungsstrahlen bilden vorzugsweise einen gemeinsamen Fokuspunkt in der Probe.
Das Objektiv kann als Immersionsobjektiv ausgebildet sein. Hierbei wird der Raum von der Probe bis zur ersten Linsenfläche einschließlich der Einspiegelungsoptik von der Seite entsprechend immergiert.

Es werden alle Punkte entlang der Linie oder Fläche durch die Probe parallel durch die Zeile oder im Weitfeld erfaßt, ohne die Intensität erhöhen zu müssen. (z.B. Ramananwendung, bei einem Punktscanner würde die Probe durch die volle Leistung auf jedem Punkt bis über die Zerstörungsgrenze belastet ( aufgeheizt)).
Soll die Probe mit der gleichen Bildrate ausgelesen werden, so ist auch eine Senkung der Leistung denkbar. Durch die Parallelisierung der Probenmessung kann hierzu die Integrationszeit entsprechend erhöht werden, so dass das gemessene Signal nach Ablauf der längeren Integrationszeit konstant ist.

Der Energieeintrag zur Erzeugung des gleichen Signales pro Probenvolumen ist identisch dem eines regulären LSM Punktscanners, da die Einstrahlrichtung in der Ebene des zu detektierenden optischen Schnittes liegt.
Es bestehen keine höheren Anforderungen an die Lichtquellen - aber eine volle Parallelisierung kann genutzt werden.
Es ist kein erhöhter Energieeintrag zur Erzielung des gleichen SNR wie in einem Linienscanner erforderlich und damit entsteht eine geringere Probenbelastung.
Es entsteht die Möglichkeit der Untersuchung von schwachen Probenwechselwirkungen wie z.B. Raman Effekten.

Es ist keine spezielle Probenpräparierung nötig.

Nachfolgend erfolgt eine weitere Beschreibung anhand der Zeichnungen:

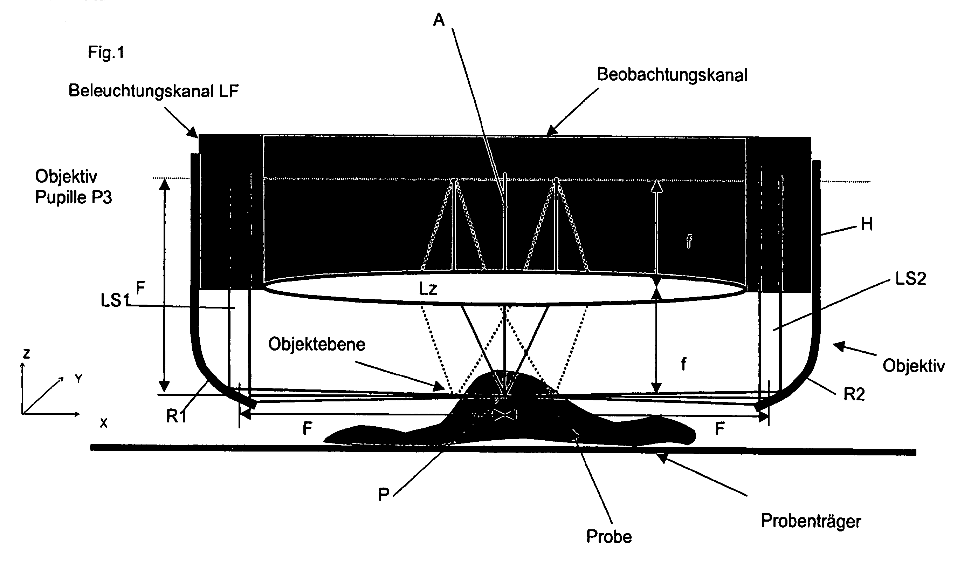

In Fig. 1 ist eine Objektivanordnung dargestellt, die aus einer zentralen Linseneinheit Lz besteht, bei der es sich um ein übliches Beobachtungsobjektiv eines Mikroskopes handeln kann.
In einem Gehäuse H sind außerhalb der Linseneinheit Lz Lichtführungen LF vorgesehen, in denen parallele Beleuchtungsstrahlen Ls1, Ls2 in Richtung zur Probe zunächst parallel zur optischen Achse A der Beobachtung in Lz verlaufen. Die Beleuchtungsstrahlen Ls1, Ls2 treffen auf am Gehäuse H angebrachte Reflektoren R1, R2, die abbildende Spiegel mit geringer Apertur sein können und die Beleuchtungsstrahlen in Richtung senkrecht zur optischen Achse der Beobachtung in einem Punkt P in der optischen Achse des Objektives Lz fokussieren.

R1,R2 können auch plane reflektierende Spiegel sein und in den Lichtführungen LF können dann Abbildungselemente mit geringer Apertur vorgesehen sein, wodurch R1,R2 nur zur Ablenkung in Richtung der Probe dienen und der Fokus in die Probe durch die Abbildungselemente erzeugt wird.
Durch die geringe Apertur verläuft die Taille der Beleuchtung im Bereich der Probe nahezu parallel und erzeugt in der Probe eine dünne Beleuchtungslinie, die in die Objektivpupille P3 abgebildet wird.
Objektivpupille P3, Objektiv Lz und der Probenfokus P befinden sich hier in einer 2f Anordnung, d.h. jeweils im Abstand der einfachen Brennweite voneinander. Hierdurch kann das Objektiv zum telezentrischen Scannen beispielsweise einer Beleuchtungslinie in der Probe eingesetzt werden.

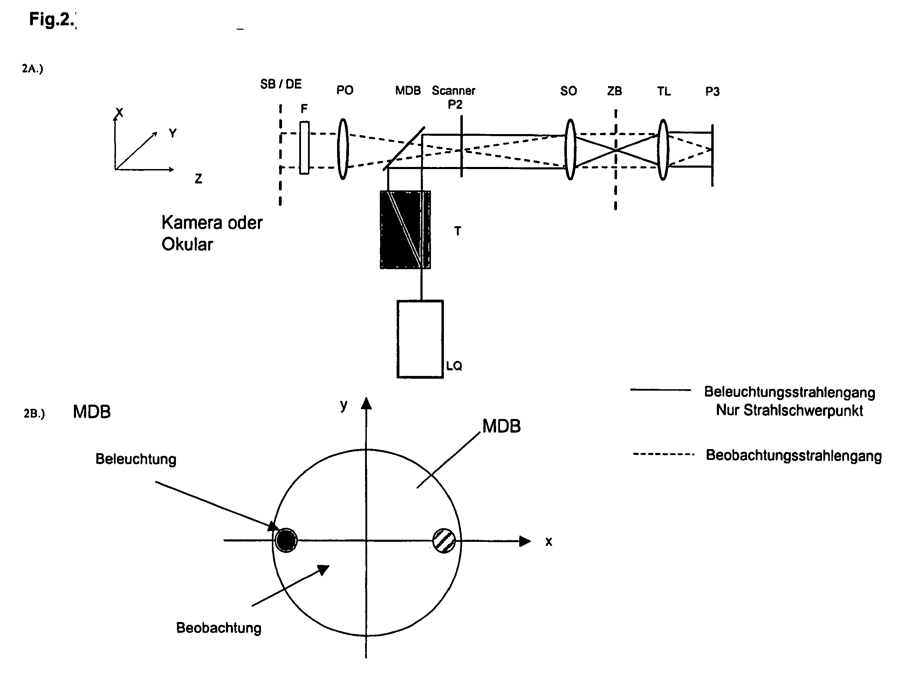

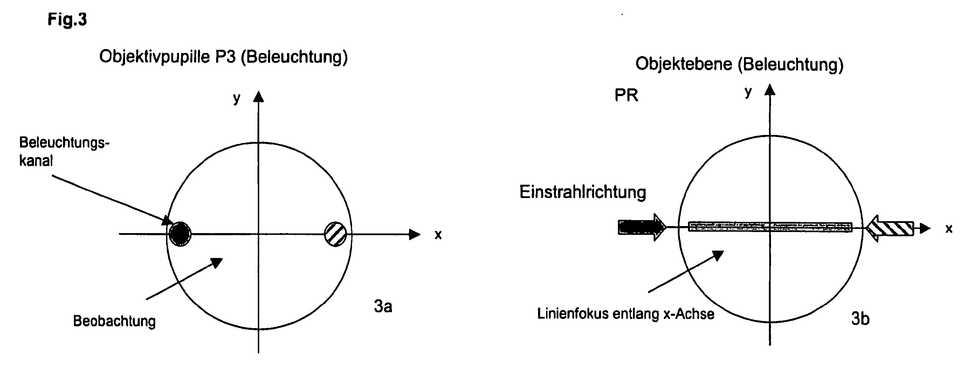

In den Figuren 2 und 3 sind Scanneranordnungen beschrieben, die jedoch nicht Gegenstand der Erfindung sind, und ferner nicht beansprucht werden.
In Fig. 2a, die an der Objektivpupille P3 ansetzt, ist einer Lichtquelle LQ ein Strahlaufteiler T nachgeordnet, der zwei parallele Teilstrahlen Ls1, Ls2 erzeugt, die über einen in einer konjugierten Ebene der Objektivpupille liegenden Strahlteiler, der an seinem Rand gegenüberliegende kreisförmige reflektierende Teilabschnitte aufweist (Abb.2b) , reflektiert und über einen Scanner P2 zur Bewegung der Beleuchtungsstrahlen über die Probe in einer Richtung , eine Scanoptik SO und eine Tubuslinse zur Übertragung eines Zwischenbildes ZB auf die Objektivpupille P3 parallel übertragen werden.
Vorteilhaft erfolgt über die Pupille P3 der Ansatz des Objektives an den Strahlengang eines Linienscanners , der einen entsprechend ausgebildeten Strahlteiler , wie in DE10257237 A1 beschrieben schon aufweist und dessen transmittierende oder reflektierende Flächen genutzt werden können.
Über den Scanner ( in der Pupille P2) des Linienscanners wird die hier beschriebene Beleuchtungslinie durch die Probe bewegt.
Der Beobachtungsstrahlengang ist gestrichelt, der Beleuchtungsstrahlengang durchgehend gezeichnet. Das Bild der Probe im Zwischenbild ZB wird über Tubuslinse, Scanoptik, Scanner descannt und transmittierend durch die für die Probenstrahlung wirksame Fläche des Strahlteilers MDB ( außer den kreisförmigen reflektierenden Stellen ) mittels einer Pinholeoptik PO auf eine ( hier optionale) Spaltblende SB vor einem Zeilendetektor abgebildet.

In Fig.3a ist der Querschnitt der Objektivpupille am MDB mit den Beleuchtungskanälen BK und der wirksamen Fläche für die Beobachtung FB dargestellt.
In Fig.3b ist die beleuchtete Linie L in der Objektebene dargestellt, auf die mit dem Objektiv fokussiert wird und die mittels der Detektion erfaßt wird. Die Dicke der Linie wird eingestellt, indem die wirksame numerische Apertur der seitlichen Optik, die entlang der Einstrahlrichtung in die Probe fokussiert variiert wird. Wird diese NA verringert, so erhöht sich entsprechend die Linienbreite. Die Manipulation der numerischen Apertur kann beispielsweise auch durch eine nicht dargestellte variable Ringblende in der Pupille, angeordnet um den Beleuchtungskanal, erfolgen. Durch Bewegung des Scanners P senkrecht zur Längsrichtung ( X Achse) wird die Linie auf der Probe senkrecht in Y - Richtung verschoben.
In Fig. 4a ist die erfindungsgemäße Anordnung für Weitfeldbeleuchtung dargestellt. Hier kann ein Teiler zur Beleuchtung der Probe aus zwei Einstrahlrichtungen verwendet werden.
In Fig. 4b ist die Ebene der Objektivpupille am Strahlteiler MDB bei Weitfeldbeleuchtung dargestellt.
Dieser weist zwei strichförmige gegenüberliegende transmittierende Bereiche B1, B2 am Außenrand auf, die jeweils einen linienförmigen Bereich der Beleuchtung ( gestrichelt) in Richtung des Außenbereiches des Objektives übertragen . Diese Bereiche werden mit den Reflektoren in Richtung der Probe mit geringer Apertur abgebildet und bilden einen quasiparallelen flächigen Lichtbereich geringer Dicke durch die Probe. Die Einstellung der Dicke erfolgt wiederum durch eine nicht dargestellte Blende in der Pupille, die die Pupille des Beleuchtungskanals entlang der x-Achse am Ort der Pupille einschnürt.

Die Beleuchtung wird durch eine Zylinderlinse L in y-Richtung fokussiert.
Im Beleuchtungsstrahlengang kann sich optional ein Aufteiler T ( z.B. doppelbrechendes Medium) zur Erzeugung von 2 Teilstrahlen befinden.

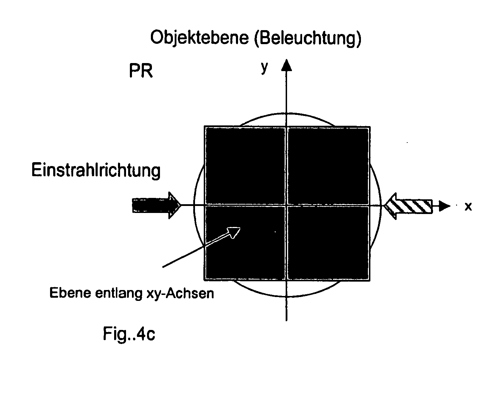

Fig.4c zeigt die aufgespannte Lichtfläche in der Probenebene ( Brennebene des Objektives)

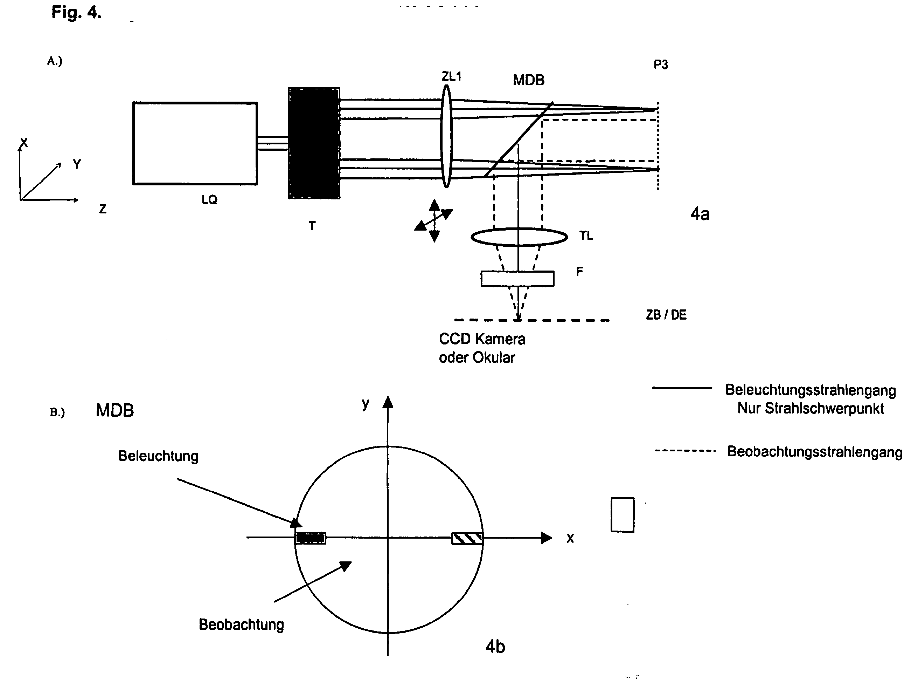

Das Probenlicht (gestrichelt)gelangt über den Strahlteiler MDB ( reflektierend ) in Richtung eines Flächendetektors DE. Eine Powell Asphäre kann optional vor der Zylinderoptik ZL1 in Abb. 4 zur Homogenisierung der Ausleuchtung entlang der y-Achse eingesetzt werden.
Die beschriebene Offenbarung stellt eine bedeutende Ausweitung der Anwendungsmöglichkeiten von schnellen konfokalen Laserscanmikroskopen dar. Die Bedeutung einer solchen Weiterentwicklung lässt sich anhand der zellbiologischen Standardliteratur und den dort beschriebenen schnellen zellulären und subzellulären Vorgängen¹ und den eingesetzten Untersuchungsmethoden mit einer Vielzahl von Farbstoffen² ablesen.
Siehe z.B.:
¹B. Alberts et al. (2002): Molecular Biology of the Cell; Garland Science.
^{1,2}G. Karp (2002): Cell and Molecular Biology: Concepts and Experiments; Wiley Text Books.
^{1,2}R. Yuste et al. (2000): Imaging neurons - a laboratory Manual; Cold Spring Harbor Laboratory Press, New York.
²R.P. Haugland (2003): Handbook of fluorescent Probes and research Products, 10th Edition; Molecular Probes Inc. and Molecular Probes Europe BV.

Die Erfindung hat insbesondere große Bedeutung für die folgenden Prozesse und Vorgange:

### Entwicklung von Organismen

Die beschriebene Erfindung ist u.a. für die Untersuchung von Entwicklungsprozessen geeignet, die sich vor allem durch dynamische Prozesse im Zehntelsekunden bis hin zum Stundenbereich auszeichnen. Beispielanwendungen auf der Ebene von Zellverbänden und ganzen Organismen sind z.B. hier beschrieben:
■ Abdul-Karim, M.A. et al. beschreiben 2003 in Microvasc. Res., 66:113-125 eine Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen.
■ Soll, D.R. et al. beschreiben 2003 in Scientific World Journ. 3:827-841 eine softwarebasierte Bewegungsanalyse von mikroskopischen Daten von Kernen und Pseudopodien lebender Zellen in allen 3 Raumdimensionen.
■ Grossmann, R. et al. beschreiben 2002 in Glia, 37:229-240 eine 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht.
Das betrifft insbesondere folgende Schwerpunkte:
- Analyse lebender Zellen in einer 3D Umgebung, deren Nachbarzellen empfindlich auf Laserbeleuchtung reagieren und die von der Beleuchtung der 3D-ROI geschützt werden müssen;
- Analyse lebender Zellen in einer 3D Umgebung mit Markierungen, die gezielt durch Laserbeleuchtung in 3D gebleicht werden sollen, z.B. FRET-Experimente;
- Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
- Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
- Gezielte Analyse lebender Zellen in einer 3D Umgebung mit Markierungen, die manipulationsbedingte Farbänderungen durch Laserbeleuchtung aufweisen, z.B. paGFP, Kaede;
- Gezielte Analyse lebender Zellen in einer 3D Umgebung mit sehr schwachen Markierungen, die z.B. eine optimale Balance von Konfokalität gegen Detektionsempfindlichkeit erfordern.
- Lebende Zellen in einem 3D-Gewebeverband mit variierenden Mehrfachmarkierungen, z.B. CFP, GFP, YFP, DsRed, HcRed u.ä.
- Lebende Zellen in einem 3D-Gewebeverband mit Markierungen, die funktionsabhängige Farbänderungen aufweisen, z.B. Ca+-Marker
- Lebende Zellen in einem 3D-Gewebeverband mit Markierungen, die entwicklungsbedingte Farbänderungen aufweisen, z.B. transgene Tiere mit GFP
- Lebende Zellen in einem 3D-Gewebeverband mit Markierungen, die manipulationsbedingte Farbänderungen durch Laserbeleuchtung aufweisen, z.B. paGFP, Kaede
- Lebende Zellen in einem 3D-Gewebeverband mit sehr schwachen Markierungen, die eine Einschränkung der Konfokalität zugunsten der Detektionsempfindlichkeit erfordern.

## Patentansprüche

1. Lichtmikroskop zur Erfassung mindestens eines Probenbereiches mit
- einer Lichtquelle zur Weitfeldbeleuchtung,
- einem Detektor (DE) in einem Detektionsstrahlengang, und mit
- einem Mikroskopobjektiv, das eine Beobachtungsoptik (Lz) zur Betrachtung zumindest teilweise transparenter Proben beinhaltet,
- einem Strahlteiler (MDB) als Hauptfarbteiler, vorzugsweise in der Objektivpupille, der zur Einkopplung an seinem Umfang gering ausgedehnte transmittierende oder reflektierende Bereiche zur Richtung des Beleuchtungslichtes auf die Probe, ansonsten aber im Wesentlichen auf der restlichen Fläche für das Probenlicht reflektierend oder transmittierend ausgebildet ist,
**dadurch gekennzeichnet, dass**
- das Mikroskopobjektiv in seinem Gehäuse (H) eine Lichtführung (LF) für mindestens ein Parallelstrahlenbündel (Lsl) der Beleuchtung außerhalb der Beobachtungsoptik (Lz) enthält,
- sowie mindestens ein Reflektor (R1) am Objektiv zur Umlenkung des Strahlbündels vorgesehen ist, um die Probe zumindest von einer Seite in einem Winkel senkrecht zur optischen Achse (A) der Beobachtungsoptik (Lz) zu beleuchten, und dass
- der Detektor (DE) im Detektionsstrahlengang zur Detektion des Probenbildes ortsauflösend ist, wobei
- in der Probe die Beleuchtungslinie senkrecht zur optischen Achse (A) der Beobachtungsoptik erzeugt wird, indem das Parallelstrahlenbündel mit niedrigerer Apertur als die des Mikroskopobjektivs in die Probe fokussiert und
- das Probenlicht in Detektionsrichtung über die Beobachtungsoptik (Lz) und den Strahlteiler (MDB) auf den ortsauflösenden Detektor (DE) abgebildet wird,
- der Strahlteiler (MDB) strichförmige gegenüberliegende Bereiche am Außenrand aufweist, die jeweils einen linienförmigen Bereich der Beleuchtung in Richtung der Reflektoren am Objektiv übertragen, der in Richtung der Probe abgebildet wird und einen quasiparallelen flächigen Lichtbereich durch die Probe bildet.

2. Lichtmikroskop nach Anspruch 1, wobei der Reflektor (R1) ein abbildender Spiegel ist, der das Beleuchtungslicht in Richtung der Probe fokussiert.

3. Lichtmikroskop nach Anspruch 1,
wobei der Reflektor (R1) ein ebener Spiegel ist und in der Lichtführung ein Abbildungselement zur Fokussierung vorgesehen ist.

4. Lichtmikroskop nach einem der Ansprüche 1-3,
wobei eine Beleuchtung von zwei Seiten mit gemeinsamem Fokuspunkt erfolgt.

5. Verfahren unter Verwendung eines Lichtmikroskopes nach einem der Ansprüche 1-4, zur Untersuchung von schwachen Probenwechselwirkungen, insbesondere Raman Effekten.

6. Verfahren unter Verwendung eines Lichtmikroskops nach einem der Ansprüche 1-4,
zur Untersuchung von Entwicklungsprozessen , insbesondere dynamischer Prozesse im Zehntelsekunden bis hin zum Stundenbereich, insbesondere auf der Ebene von Zellverbänden und ganzen Organismen, insbesondere nach mindestens einem der folgenden Punkte:
• Analyse lebender Zellen in einer 3D Umgebung, deren Nachbarzellen empfindlich auf Laserbeleuchtung reagieren und die von der Beleuchtung der 3D-ROI geschützt werden müssen;
• Analyse lebender Zellen in einer 3D Umgebung mit Markierungen, die gezielt durch Laserbeleuchtung in 3D gebleicht werden sollen, z.B. FRET-Experimente;
• Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
• Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
• Gezielte Analyse lebender Zellen in einer 3D Umgebung mit Markierungen, die manipulationsbedingte Farbänderungen durch Laserbeleuchtung aufweisen, z.B. paGFP, Kaede;
• Gezielte Analyse lebender Zellen in einer 3D Umgebung mit sehr schwachen Markierungen, die z.B. eine optimale Balance von Konfokalität gegen Detektionsempfindlichkeit erfordern.
• Lebende Zellen in einem 3D-Gewebeverband mit variierenden Mehrfachmarkierungen, z.B. CFP, GFP, YFP, DsRed, HcRed u.ä.
• Lebende Zellen in einem 3D-Gewebeverband mit Markierungen, die funktionsabhängige Farbänderungen aufweisen, z.B. Ca+-Marker
• Lebende Zellen in einem 3D-Gewebeverband mit Markierungen, die entwicklungsbedingte Farbänderungen aufweisen, z.B. transgene Tiere mit GFP
• Lebende Zellen in einem 3D-Gewebeverband mit Markierungen, die manipulationsbedingte Farbänderungen durch Laserbeleuchtung aufweisen, z.B. paGFP, Kaede
• Lebende Zellen in einem 3D-Gewebeverband mit sehr schwachen Markierungen, die eine Einschränkung der Konfokalität zugunsten der Detektionsempfindlichkeit erfordern.

## Claims

1. Optical microscope for detecting at least one sample region, having
- a light source for widefield illumination,
- a detector (DE) in a detection beam path, and having
- a microscope objective which includes an observation optical system (Lz) for viewing at least partly transparent samples,
- a beam splitter (MDB) as the main colour splitter, preferably in the objective pupil, which is formed for the input-coupling on its periphery of slightly extended transmitting or reflective regions in the direction of the illumination light onto the sample but is otherwise substantially formed so as to be reflective or transmitting for the sample light on the remaining surface,
**characterised in that**
- the microscope objective includes in its housing (H) a light guide (LF) for at least one bundle of parallel beams (Lsl) of the illumination outside the observation optical system (Lz),
- and at least one reflector (R1) is provided on the objective for diverting the bundle of beams in order to illuminate the sample at least from one side at an angle perpendicular to the optical axis (A) of the observation optical system (Lz), and **in that**
- the detector (DE) in the detection beam path is spatially-resolving in order to detect the sample image, wherein
- in the sample the illumination line is produced so as to be perpendicular to the optical axis (A) of the observation optical system, **in that** the bundle of parallel beams is focused into the sample with a lower aperture than that of the microscope objective, and
- the sample light in the detection direction is imaged via the observation optical system (Lz) and the beam splitter (MDB) onto the spatially-resolving detector (DE),
- the beam splitter (MDB) has line-like opposed regions on the outer edge which transmit in each case a line-like region of the illumination in the direction of the reflectors on the objective which is imaged in the direction of the sample and forms a quasi-parallel planar light region through the sample.

2. Optical microscope as claimed in Claim 1, wherein the reflector (R1) is an imaging mirror which focuses the illumination light in the direction of the sample.

3. Optical microscope as claimed in Claim 1, wherein the reflector (R1) is a plane mirror and an imaging element is provided in the light guide for focussing purposes.

4. Optical microscope as claimed in any one of Claims 1 to 3, wherein two sides are illuminated with a common focal point.

5. Method using an optical microscope as claimed in any one of Claims 1 to 4 for examining weak sample interactions, in particular Raman effects.

6. Method using an optical microscope as claimed in any one of Claims 1 to 4 for examining development processes, in particular dynamic processes in the range of tenths of a second to hours, in particular on the level of united cell structures and whole organisms, in particular in accordance with at least one of the following points:
- analysis of living cells in a 3D environment, whose neighbouring cells react sensitively to laser illumination and which have to be protected from the illumination of the 3D ROI;
- analysis of living cells in a 3D environment having markings which are to be bleached in a targeted manner by laser illumination in 3D, e.g., FRET experiments;
- analysis of living cells in a 3D environment having markings which are to be bleached in a targeted manner by laser illumination and which are also to be observed simultaneously outside the ROI, e.g., FRAP and FLIP experiments in 3D;
- targeted analysis of living cells in a 3D environment having markings and medicines which have manipulation-induced changes by laser illumination, e.g., activation of transmitters in 3D;
- targeted analysis of living cells in a 3D environment having markings which have manipulation-induced colour changes by laser illumination, e.g., paGFP, Kaede;
- targeted analysis of living cells in a 3D environment having very weak markings which require e.g., an optimum balance between confocality and detection sensitivity;
- living cells in a 3D tissue formation having varying multiple markings, e.g., CFP, GFP, YFP, DsRed, HcRed, and the like;
- living cells in a 3D tissue formation having markings which have function-dependent colour changes, e.g., Ca+ markers;
- living cells in a 3D tissue formation having markings which have development-induced colour changes, e.g., transgenic animals with GFP;
- living cells in a 3D tissue formation having markings which have manipulation-induced colour changes by laser illumination, e.g., paGFP, Kaede;
- living cells in a 3D tissue formation having very weak markings which require a restriction in confocality in favour of detection sensitivity.

## Revendications

1. Microscope optique pour la détection d'au moins une zone d'échantillon avec
- une source de lumière pour l'éclairage d'un champ large,
- un détecteur (DE) dans une marche de détection des rayons, et avec
- un objectif de microscope, qui contient une optique d'observation (Lz) pour l'observation d'échantillons au moins partiellement transparents,
- un séparateur de faisceau (MDB) comme séparateur couleur principal, de préférence dans la pupille de l'objectif, qui est réalisé pour le couplage de zones faiblement étendues, transmettantes ou réfléchissantes à son pourtour pour diriger la lumière d'éclairage sur l'échantillon, mais sinon est réalisé d'une manière sensiblement réfléchissante ou transmettante sur la face restante pour la lumière d'échantillon,
**caractérisé en ce que**
- l'objectif de microscope contient dans son boîtier (H) un guidage de lumière (LF) pour au moins un faisceau de rayons parallèles (Lsl) de l'éclairage à l'extérieur de l'optique d'observation (Lz),
- ainsi qu'au moins un réflecteur (R1) à l'objectif pour la déviation du faisceau de rayons, pour éclairer l'échantillon au moins depuis un côté selon un angle perpendiculaire à l'axe optique (A) de l'optique d'observation (Lz), et **en ce que** le détecteur (DE) dans la marche de détection des rayons est à résolution spatiale pour la détection de l'image de l'échantillon, où
- est produit dans l'échantillon la ligne d'observation perpendiculairement à l'axe optique (A) de l'optique d'observation, **en ce que** le faisceau de rayons parallèles est focalisé avec une plus petite ouverture que celle de l'objectif du microscope dans l'échantillon et
- la lumière d'échantillon est représentée dans la direction de détection par l'optique d'observation (Lz) et le séparateur de faisceau (MDB) sur le détecteur (DE) à résolution spatiale,
- le séparateur de faisceau (MDB) présente des zones opposées en forme de traits au bord extérieur qui transmettent respectivement une zone linéaire de l'éclairage dans la direction des réflecteurs à l'objectif, qui est représentée dans la directeur de l'échantillon et forme une zone de lumière plane quasi parallèle à travers l'échantillon.

2. Microscope optique selon la revendication 1, où le réflecteur (R1) est un miroir représentant qui focalise la lumière d'éclairage dans la direction de l'échantillon.

3. Microscope optique selon la revendication 1, où le réflecteur (R1) est un miroir plan et où est prévu dans le guidage de lumière un élément de représentation pour la focalisation.

4. Microscope optique selon l'une des revendications 1 à 3, où l'éclairage a lieu depuis deux côtés avec un point focal commun.

5. Procédé d'utilisation d'un microscope optique selon l'une des revendications 1 à 4, pour l'examen d'interactions faibles d'échantillons, en particulier d'effets Raman.

6. Procédé d'utilisation d'un microscope optique selon l'une des revendications 1 à 4, pour examiner des processus de développement, en particulier de processus dynamiques dans des dixièmes de secondes jusqu'à la plage d'horaire, en particulier au niveau d'associations de cellules et d'organismes entiers, en particulier selon au moins un des points suivantes :
• analyse de cellules vivantes dans un environnement 3D dont les cellules avoisinantes sont sensibles à l'éclairage laser et qui doivent être protégées contre l'éclairage des 3D-ROI ;
• analyse de cellules vivantes dans un environnement 3D avec des marquages, qui doivent être blanchies d'une manière ciblée par un éclairage laser dans 3D, par exemple des expériments FRET ;
• analyse de cellules vivantes dans un environnement 3D avec des marquages, qui doivent être blanchies d'une manière ciblée par un éclairage laser et doivent être observées en même temps aussi à l'extérieur de la ROI, par exemple des expériments FRAP et FLIP dans 3D ;
• analyse ciblée de cellules vivantes dans un environnement 3D avec des marquages et des pharmaceutiques qui présentent des modifications liées à la manipulation par l'éclairage laser, par exemple l'activation de transmetteurs dans 3D ;
• analyse ciblée de cellules vivantes dans un environnement 3D avec des marquages, qui présentent des modifications couleur liées à la manipulation par l'éclairage laser, par exemple paGFP, Kaede ;
• analyse ciblée de cellules vivantes dans un environnement 3D avec des marquages très faibles, qui requièrent par exemple un équilibre optimal de foyer commun contre la sensibilité de détection ;
• cellules vivantes dans une association de cellules dans le tissu 3D avec des marquages multiples qui varient, par exemple CFP, GFP, YFP, DsRed, HcRed et analogue ;
• cellules vivantes dans une association de cellules dans le tissu 3D avec des marquages qui présentent des modifications de couleur dépendant de la fonction, par exemple un marqueur Ca+ ;
• cellules vivantes dans une association de cellules dans le tissu 3D avec des marquages qui présentent des modifications de couleur liées au développement, par exemple des animaux transgéniques avec GFP ;
• cellules vivantes dans une association de cellules dans le tissu 3D avec des marquages, qui présentent des modifications de couleur liées à la manipulation par l'éclairage laser, par exemple paGFP, Kaede ;
• cellules vivantes dans une association de cellules dans le tissu 3D avec des marquages très faibles, qui requièrent une limitation du foyer commun en faveur de la sensibilité de détection.
